# EUROPEAN PATENT SPECIFICATION

(11) **EP 3 524 501 B1**
(45) Date of publication and mention of the grant of the patent: **17.03.2021**
(21) Application number: 19156097.8
(22) Date of filing: 08.02.2019
(51) Int. Cl.: B62K 11/04, F01N 1/00

(54) **SADDLE-TYPE VEHICLE**
SATTELFAHRZEUG
VÉHICULE DE TYPE À ENFOURCHER

(30) Priority: 09.02.2018 JP 2018022351
(43) Date of publication of application: 14.08.2019
(73) Proprietor: Honda Motor Co., Ltd., Tokyo 107-8556 (JP)
(72) Inventor: Kurasawa, Yuji, Saitama, 351-0193 (JP)
(74) Representative: Kiwit, Benedikt

(56) References cited:
- EP-A1- 3 165 437
- EP-A1- 3 165 731
- WO-A1-2018/025652
- JP-A- H11 198 891

## Description

### [Technical Field]

The present invention relates to a saddle-type vehicle including an exhaust device.

### [Background Art]

Heretofore, there has been known a saddle-type vehicle having a vehicle body frame, a unitary swing engine swingably supported on the vehicle body frame by way of a link, an exhaust pipe connected to the unitary swing engine, and a catalytic device disposed in the exhaust pipe (see, for example, JP 2013-36422 A).

WO 2018/025652 A1, discloses the features of the preamble of claim 1 aside from the plurality of catalysts, and shows a saddle-ridden vehicle with an exhaust structure which makes it possible for a catalyst to be readily activated while the bank angle of the vehicle is maintained. The vehicle comprises a fuel tank disposed below a floor step; a power unit which is disposed to the rear of the floor step and the fuel tank, and which is supported on a vehicle body frame by means of a link member in such a way as to be capable of swinging; an exhaust pipe connected to the power unit; and a catalytic converter provided in the exhaust pipe. The catalytic converter is disposed with the longitudinal direction thereof oriented in the width direction of the vehicle, and the catalytic converter is disposed to the rear of the fuel tank in such a way that the entire catalytic converter overlaps the fuel tank in a front view of the vehicle.

### [Summary of the Invention]

### [Problem to be solved by the Invention]

The exhaust device mounted on saddle-type vehicles have had only one catalyst disposed somewhere in the exhaust pipe. If a plurality of catalysts is placed in a catalytic device in the exhaust pipe in order to increase the ability of the catalytic device to purify exhaust gases, then the catalytic device is made large in size. It is desirous that the catalytic device has catalysts disposed in a compact layout while at the same time having an increased ability to purify exhaust gases.

The present invention has been made under the circumstances described above. It is an object of the present invention to provide a saddle-type vehicle which incorporates a catalytic device having a plurality of catalysts disposed in a compact layout.

### [Means for Solving the Problem]

In order to achieve the above object, there is provided in accordance with the present invention a saddle-type vehicle comprising: a vehicle body frame; a unitary swing engine including a cylinder assembly and a crankcase which are disposed substantially horizontally, the unitary swing engine being swingably supported on the vehicle body frame by a link; and an exhaust device connected to the unitary swing engine and having an exhaust pipe and a catalytic device disposed in the exhaust pipe;
wherein the link is disposed upward of the crankcase; at least part of the catalytic device is disposed downward of the cylinder assembly as viewed in side elevation; the catalytic device is positioned in an area between a hypothetical line interconnecting a link joint by which the link is coupled to the vehicle body frame and a front end of the crankcase and a hypothetical line interconnecting the link joint and an exhaust pipe joint of the unitary swing engine to which an end of the exhaust device is connected; the exhaust device includes a catalyst case housing the catalytic device therein; the catalytic device includes a plurality of catalysts including first and second catalysts, the first catalyst being disposed upstream in the exhaust pipe; the first catalyst is disposed forward of the crankcase and downward of the cylinder assembly, and is disposed adjacent to an exhaust port of the unitary swing engine as viewed in bottom view. An exhaust device joint joining the crankcase and the exhaust device is provided. The exhaust device joint includes a crankcase stay mounted on the crankcase, an exhaust device stay mounted on the catalyst case, and a fastening member by which the crankcase stay and the exhaust device stay are joined to each other.

With the above arrangement, the catalysts are disposed in a compact layout, and as the first catalyst disposed upstream in the exhaust pipe is disposed closely to the exhaust port, the catalytic device can be activated early for an increased ability to purify exhaust gases.

Furthermore, since the link is disposed upward of the unitary swing engine, a space is created below the unitary swing engine for the catalytic device to be disposed therein. The catalytic device can be placed in a compact layout out of physical interference with other parts around the catalytic device. As the crankcase and the exhaust device are joined to each other by the exhaust device joint, even when the exhaust pipe and the catalytic device swing in unison with the unitary swing engine, the catalytic device is stably supported upon swinging movement of the unitary swing engine.

In the above arrangement, the crankcase may be divided into left and right crankcase members by a crankcase split plane, and at least part of the first catalyst may overlap a hypothetical line extending in and along the crankcase split plane as viewed in bottom view.

With the above arrangement, the catalysts are disposed in a compact layout, and as the first catalyst that is disposed upstream in the exhaust pipe is disposed closely to the exhaust port, the catalytic device can be activated early for an increased ability to purify exhaust gases.

In the above arrangement, the catalysts may be housed respectively in catalyst holders, the catalyst holders may be joined to each other by welding, and the catalyst case may have an increased-diameter portion projecting radially outward out of physical interference with welded portions of the catalyst holders.

With the above arrangement, when the catalytic device is disposed in the limited space forward of the crankcase and downward of the cylinder assembly, only the increased-diameter portion of the catalyst case has an increased diameter, and the remainder of the catalyst case has no increased diameter. Therefore, when the first and second catalysts are joined to each other therein, the catalytic device that includes the first and second catalysts can be disposed in a compact layout.

In the above arrangement, the saddle-type vehicle includes an exhaust device joint that joins the crankcase and the exhaust device to each other.

With the above arrangement, as the crankcase and the exhaust device are joined to each other by the exhaust device joint, even when the exhaust pipe and the catalytic device swing in unison with the unitary swing engine, the catalytic device is stably supported upon swinging movement of the unitary swing engine.

In the above arrangement, the exhaust device joint includes a crankcase stay mounted on the crankcase, an exhaust device stay mounted on the catalyst case, and a fastening member by which the crankcase stay and the exhaust device stay are joined to each other.

With the above arrangement, inasmuch as only the increased-diameter portion of the catalyst case has an increased diameter and the catalyst case does not need to have an increased diameter in its entirety, the outer profile of the catalyst case does not need to have an increased diameter except for the increased-diameter portion 131c, so that the catalyst case does not have a more gradually curved surface. The exhaust device stay on the outer surface of the catalyst case is thus able to hold the catalyst case stably. As the exhaust device stay holds the catalyst case stably, the exhaust device stay may be welded to the catalyst case in a small range.

In the above arrangement, the crankcase stay and the exhaust device stay may be offset transversely of the vehicle from each other and joined to each other in transversely overlapping relationship to each other.

With the above arrangement, the crankcase stay and the exhaust device stay are transversely offset from each other and joined to each other in transversely overlapping relationship to each other. Consequently, the exhaust device joint has an increased supporting rigidity.

In the above arrangement, the exhaust pipe of the exhaust device may include a vertical portion extending downward from the exhaust pipe joint of the cylinder assembly, a side extension extending from a downstream end of the vertical portion laterally toward one transverse side of the hypothetical line that extends in and along the crankcase split plane of the crankcase, and a U-shaped curved portion contiguous to the side extension, and the crankcase stay may be disposed on the other transverse side of the hypothetical line that extends in and along the crankcase split plane as viewed in bottom view.

With the above arrangement, since the crankcase stay is disposed on the other transverse side of the crankcase split plane, the exhaust pipe extends only to one side of the crankcase split plane, making the weight of the exhaust device out of balance. However, the crankcase stay disposed on the other side of the crankcase split plane allows the catalytic device to be stably supported on the unitary swing engine.

In the above arrangement, the catalytic device may have a longitudinal axis oriented transversely across the saddle-type vehicle, and the exhaust device joint and the exhaust pipe joint that interconnects the exhaust pipe and the cylinder assembly may be disposed one on each side of a central transverse axis of the catalytic device, as viewed in bottom view.

With the above arrangement, the central transverse axis is positioned between the exhaust pipe joint that interconnects the exhaust pipe and the cylinder assembly and the exhaust device joint that joins the exhaust device to the crankcase. Consequently, the catalytic device is stably supported on the unitary swing engine.

### [Effects of the Invention]

According to the present invention, the catalysts are disposed in a compact layout, and the first catalyst that is disposed upstream in the exhaust pipe can be activated early for the catalytic device to have an increased ability to purify exhaust gases.

### [Brief Description of the Drawings]

FIG. 1 is a left side-elevational view of a saddle-type vehicle according to an embodiment of the present invention;
FIG. 2 is a fragmentary right side-elevational view of a central portion of the saddle-type vehicle;
FIG. 3 is a bottom view of the saddle-type vehicle including the parts illustrated in FIG. 2;
FIG. 4 is a right side-elevational view of a unitary swing engine and peripheral parts of the saddle-type vehicle;
FIG. 5 is a bottom view of the unitary swing engine and peripheral parts of the saddle-type vehicle;
FIG. 6 is a perspective view of the unitary swing engine and peripheral parts of the saddle-type vehicle, as viewed from a lower right side thereof;
FIG. 7 is a fragmentary left side-elevational view of a side stand, a catalytic device, and peripheral parts of the saddle-type vehicle;
FIG. 8 is a sectional view taken along line VIII-VIII of FIG. 1;
FIG. 9 is a sectional view taken along line IX-IX of FIG. 1;
FIG. 10 is a fragmentary perspective view of the unitary swing engine and peripheral parts of the saddle-type vehicle, as viewed obliquely from an upper right side thereof;
FIG. 11 is a fragmentary left side-elevational view of the unitary swing engine and peripheral parts of the saddle-type vehicle;
FIG. 12 is a fragmentary plan view of main parts of an exhaust device of the saddle-type vehicle;
FIG. 13 is a fragmentary plan view of the exhaust device illustrated in FIG. 12, with a heat insulation plate attached thereto; and
FIG. 14 is a horizontal longitudinal sectional view of the main parts of the exhaust device.

### [Mode for Carrying out the Invention]

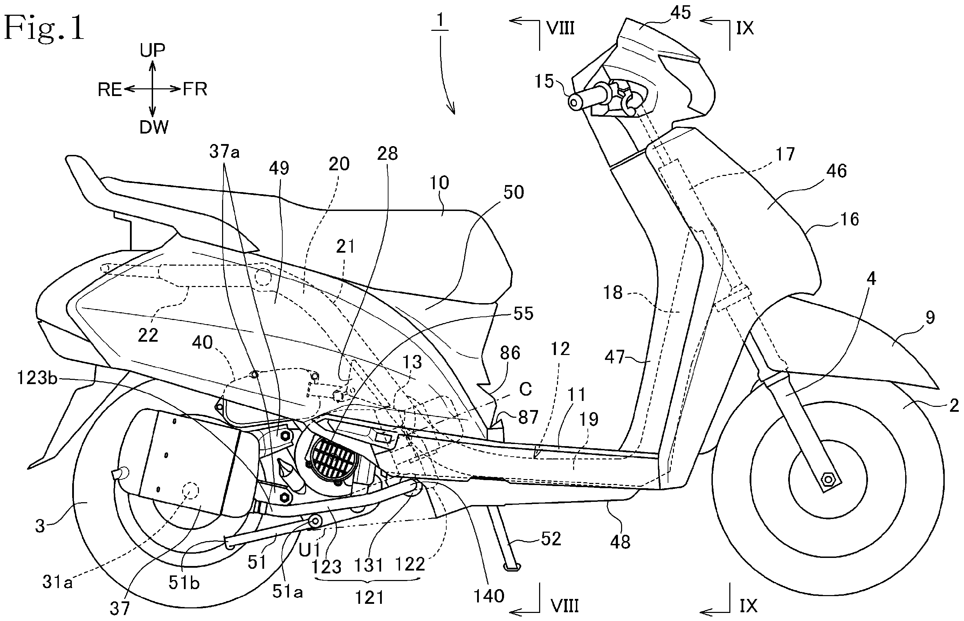

A saddle-type vehicle according to an embodiment of the present invention will be described below with reference to FIGS. 1 through 14 of the accompanying drawings. In the description that follows, directions including forward, rearward, leftward, rightward, upward, downwards, and other directional expressions shall be interpreted as identical to those used with respect to the vehicle body of the saddle-type vehicle unless particularly specified otherwise. In some of the figures, the reference characters FR represent a forward direction of the vehicle body, RE a rearward direction, LH a leftward direction, RH a rightward direction, UP an upward direction, and DW a downward direction.

FIG. 1 is a left side-elevational view of a saddle-type vehicle according to an embodiment of the present invention. In FIG. 1, of all parts that are provided as pairs of left and right parts, only left parts are illustrated.

The saddle-type vehicle, generally denoted by 1, is a scooter-type motorcycle having a low step floor 11 for supporting thereon the feet of a rider seated on a rider's seat 10. The saddle-type vehicle 1 has a front wheel 2 as a steerable wheel rotatably supported on a front portion of a vehicle body frame 12 and a rear wheel 3 as a drive wheel rotatably supported on a unitary swing engine or power unit 13 mounted on a rear portion of the saddle-type vehicle 1.

The saddle-type vehicle 1 has a front fork 4 pivotally supported on a front end of the vehicle body frame 12. The front wheel 2 is rotatably supported on the lower end of the front fork 4. A steering handle 15 to be operated to steer the saddle-type vehicle 1 is mounted on the upper end of the front fork 4.

The saddle-type vehicle 1 includes a vehicle body cover 16 that covers the vehicle body frame 12 and other parts.

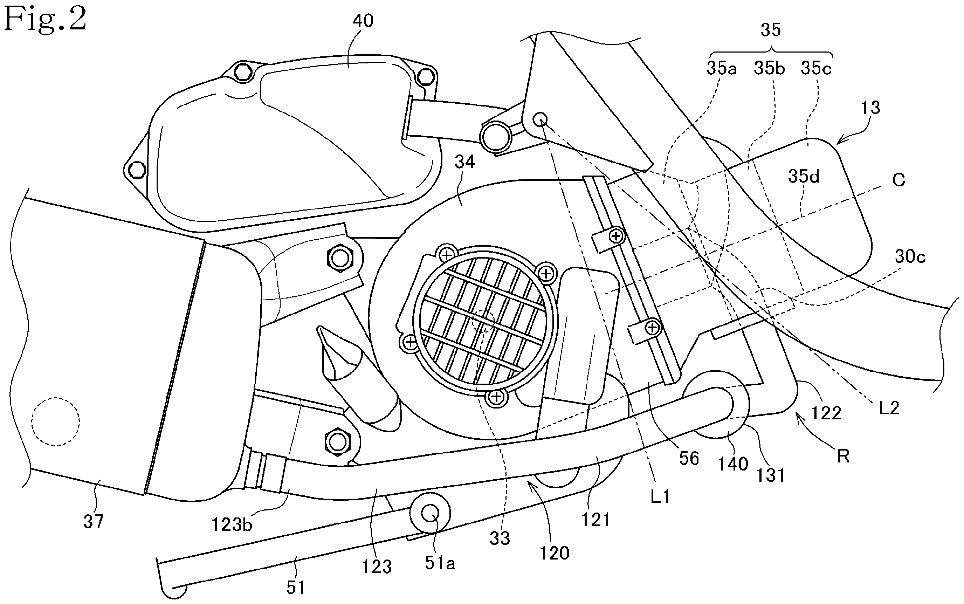

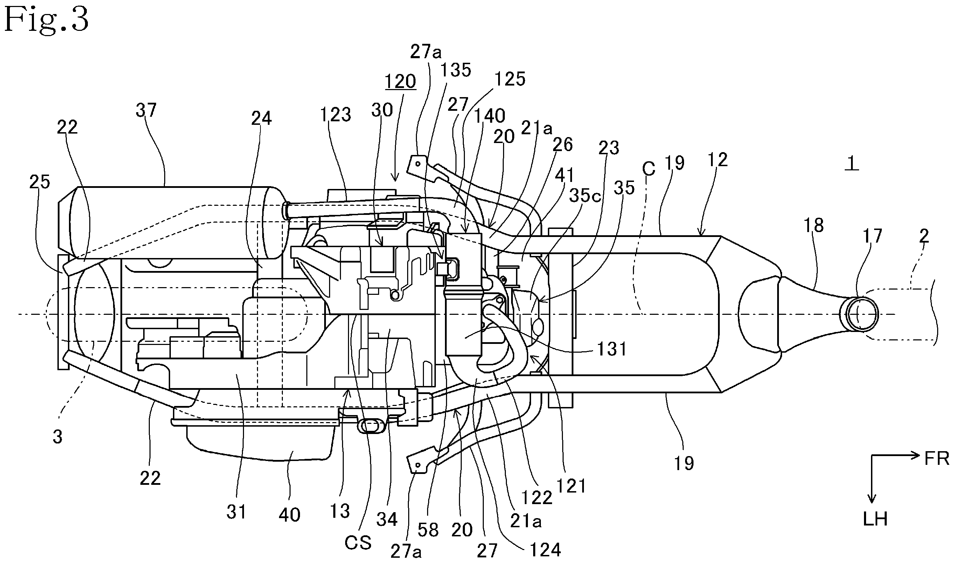

FIG. 2 is a fragmentary right side-elevational view of a central portion of the saddle-type vehicle 1. In FIG. 2, the vehicle body cover 16, the rider's seat 10, the front fork 14, and so on are omitted from illustration. FIG. 3 is a bottom view of the saddle-type vehicle 1 including the parts illustrated in FIG. 2.

As illustrated in FIGS. 1 through 3, the vehicle body frame 12 includes a head pipe 17 on its front end, a down frame 18 extending rearward and downward from the head pipe 17, a pair of left and right lower frames 19 extending substantially horizontally rearward from the lower end of the down frame 18, and a pair of left and right seat frames 20 extending rearward and upward from the rear ends of the lower frames 19.

The front fork 4 is rotatably supported in and extends through the head pipe 17. The rider's seat 10 is supported on the seat frames 20. Each of the lower frames 19 and the seat frames 20 is in the form of a pipe extending longitudinally, i.e., forwardly and rearwardly, with respect to the vehicle body frame 12.

The lower frames 19 extend substantially parallel to a longitudinal central line of the saddle-type vehicle 1, which is a straight line interconnecting the transverse centers of the front and rear wheels 2 and 3 in longitudinal directions of the saddle-type vehicle 1. A hypothetical line C that extends in and along a crankcase split plane CS to be described later may be aligned with the longitudinal central line of the saddle-type vehicle 1.

Each of the seat frames 20 includes a slanted portion 21 extending rearward and upward from one of the lower frames 19 and a horizontal portion 22 extending from the rear end of the slanted portion 21 to the rear end of the vehicle body frame 12.

The slanted portions 21 include respective widened portions 21a shown in FIG. 3 in their front end portions where the transverse distance therebetween is progressively larger in a rearward direction.

The vehicle body frame 12 also includes a cross member 23 transversely interconnecting the rear ends of the lower frames 19, an upper cross member 24 transversely interconnecting the rear ends of the slanted portions 21, and a rear cross member 25 transversely interconnecting the rear ends of the horizontal portions 22.

The vehicle body frame 12 further includes a box support frame 26 transversely interconnecting the widening portions 21a of the slanted portions 21, and a pair of left and right support frames 27 extending transversely outward from respective outer side surfaces of the widening portions 21a.

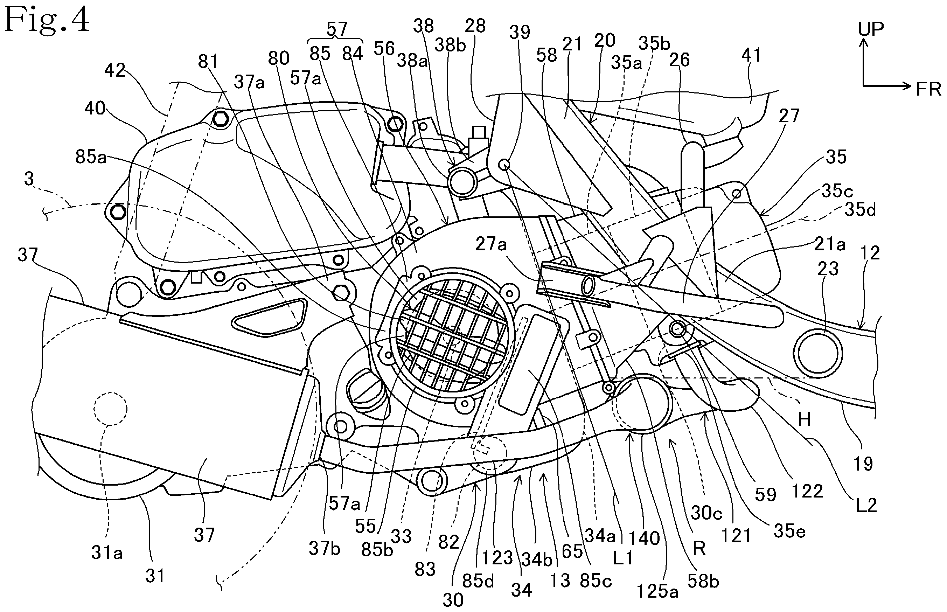

Moreover, the vehicle body frame 12 includes a pair of left and right engine brackets 28 (see FIGS. 1 and 4) projecting rearward from respective rear surfaces of the slanted portions 21.

The unitary swing engine 13 is a unitary swing power unit including an internal combustion engine 30 (hereinafter referred to as "engine 30") and an arm portion 31 (see FIGS.3 and 4) extending rearward and being integral with the engine 30. The rear wheel 3 is rotatably supported on the arm portion 31. The arm portion 31 is in the form of a hollow case housing therein a belt-type continuously variable transmission, not depicted, for transmitting output power from the engine 30 to the rear wheel 3. A kick pedal for manually starting the engine 30 is mounted on an outer surface of the arm portion 31.

The engine 30 has a crankcase 34 (see FIG.2) housing therein a crankshaft 33 extending transversely in the widthwise directions of the saddle-type vehicle 1, and a cylinder assembly 35 extending forwardly and substantially horizontally from a front surface of the crankcase 34.

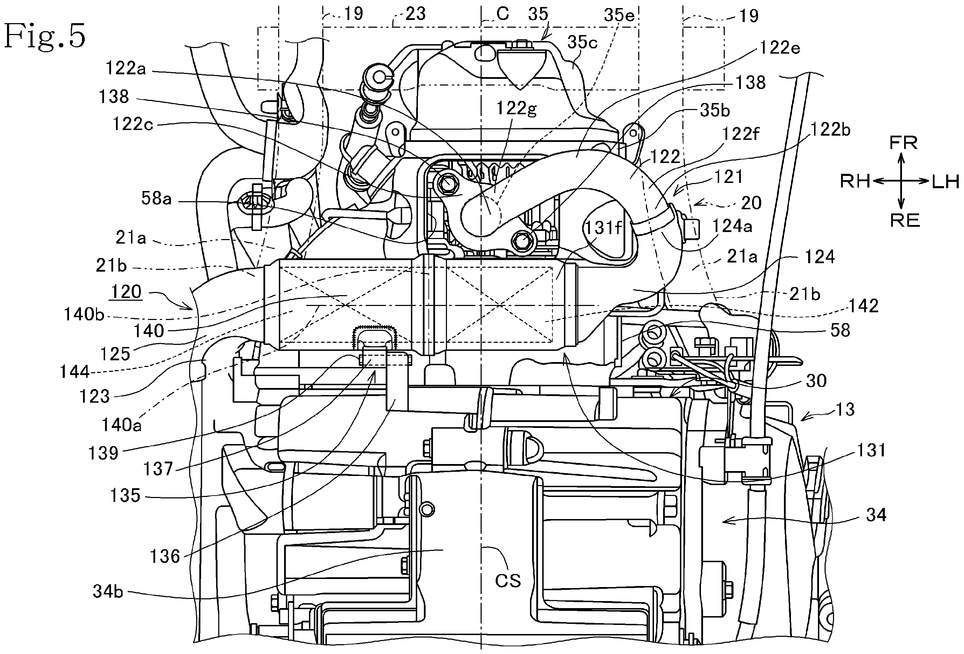

The cylinder assembly 35 includes a cylinder block 35a, a cylinder head 35b, and a head cover 35c that are arranged successively in the order named from the crankcase 34. The cylinder assembly 35 has a central axis 35d, i.e., the central axis of a cylinder bore defined in the cylinder block 35a in which a piston is reciprocably movable, extending substantially horizontally though slightly progressively rising forward. The cylinder assembly 35 has the central axis 35d extending longitudinally, i.e., in the forward and rearward directions, of the saddle-type vehicle 1. The crankcase 34 is made up of left and right case members that are detachably coupled together across the crankcase split plane CS. As illustrated in FIG. 5, which is a bottom view of the unitary swing engine 13, a line that extends in and along the crankcase split plane CS is defined as the hypothetical line C.

The engine 30 has an intake device including an air cleaner box 40 and a throttle body, not depicted, connected to and extending downstream from the air cleaner box 40.

The air cleaner box 40 is supported on the arm portion 31 and positioned upward of the arm portion 31. The throttle body is disposed forward of the air cleaner box 40 and upward of the unitary swing engine 13, and has a downstream end connected to an intake port that is defined in an upper surface of the cylinder head 35b.

Ambient air drawn from the air cleaner box 40 is mixed with fuel ejected from a fuel ejection valve, not depicted, producing an air-fuel mixture. The air-fuel mixture is delivered through the throttle body and an intake port, not illustrated in the engine 30 into a cylinder, not depicted. The air-fuel mixture is then combusted in the cylinder. Exhaust gases that are discharged from the cylinder are delivered from an exhaust port 30c (see FIG. 2) defined in a lower surface of the cylinder head 35b to an exhaust device 120.

The exhaust device 120 of the engine 30 extends rearward from the cylinder head 35b and has a rear end or downstream end connected to a muffler 37 as an exhaust noise silencing device. The muffler 37 is disposed on a right side or one the side of the rear wheel 3. The muffler 37 is fixed to a right rear portion of the crankcase 34 by front stays 37a (see FIG. 1).

The arm portion 31 extends rearward from a left rear portion of the crankcase 34 and is positioned on a left side of the rear wheel 3. The rear wheel 3 is rotatably supported on a rear wheel axle 31a on a rear end portion of the arm portion 31 and hence is supported in a cantilevered fashion by the arm portion 31.

In other words, the muffler 37 is disposed on one transverse side or right side of the rear wheel 3 that is positioned on the hypothetical line C (FIG. 3) extending in and along the crankcase split plane CS, and the arm portion 31 is disposed on the other transverse side or left side of the rear wheel 3.

The unitary swing engine 13 is swingably supported on the vehicle body frame 12 by a link 38 (see FIG. 4) disposed upward of the crankcase 34.

The link 38 is coupled to the vehicle body frame 12 by a pivot shaft or link joint 39 that transversely interconnects the engine brackets 28 to the seat frames 20. The unitary swing engine 13 is thus swingable about the pivot shaft 39.

A rear suspension 42 (see FIG. 4) for dampening swinging movement of the unitary swing engine 13 extends between and is coupled to the arm portion 31 and one of the seat frames 20.

A storage box 41 (see FIG. 4) for storing objects including a helmet, etc. is disposed between the left and right seat frames 20 above the engine 30. The storage box 41 has an opening defined in an upper wall thereof and openably closed by the rider's seat 10. The storage box 41 has a front portion supported by the box support frame 26 that extends upward from the widened portions 21a.

As illustrated in FIG. 1, the vehicle body cover 16 includes an upper cover 45 covering the steering handle 15 and peripheral parts thereof, a front cover 46 covering front and side portions of the head pipe 17 and the down frame 18, and a leg shield 47 joined to a rear portion of the front cover 46 and covering rear portions of the head pipe 17 and the down frame 18.

The vehicle body cover 16 also includes a lower cover 48 covering lower portions of the lower frames 19, the step floor 11 covering upper portions of the lower frames 19, a pair of left and right rear side covers 49 covering side portions of the seat frames 20 and the storage box 41 beneath the rider's seat 10, and a central lower cover 50 covering front portions of the storage box 41 and the cylinder assembly 35 beneath the rider's seat 10.

The saddle-type vehicle 1 also includes a front fender 9 covering an upper portion of the front wheel 2.

A central stand 51 for keeping the saddle-type vehicle 1 parked upright on the ground is mounted on a lower surface of the crankcase 34. The central stand 51 is angularly movably supported on the crankcase 34 by a central stand pivot shaft 51a. The central stand 51 is angularly movable about the central stand pivot shaft 51a between a retracted position where the central stand 51 is lifted and a parking position where the central stand 51 is lowered to keep the saddle-type vehicle 1 parked on the ground. The central stand 51 has a pair of left and right feet 51b on lower ends thereof for contact with the ground.

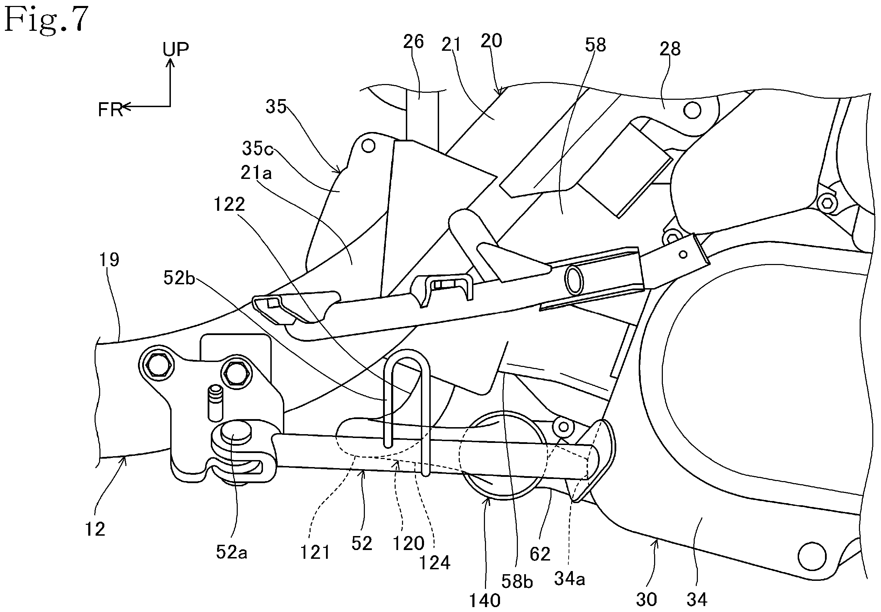

A rod-shaped side stand 52 (see FIG. 7) for keeping the saddle-type vehicle 1 parked obliquely on the ground is mounted on a rear portion of the left lower frame 19 and positioned forward of the cylinder assembly 35. The side stand 52 is supported on the left lower frame 19 by a side stand pivot shaft 52a forward of the cylinder assembly 35. The side stand 52 is angularly movable about the side stand pivot shaft 52a between a retracted position where the side stand 52 is lifted and a parking position where the side stand 52 is lowered to keep the saddle-type vehicle 1 parked on the ground.

Structural details of the unitary swing engine 13 and peripheral parts thereof will be described below.

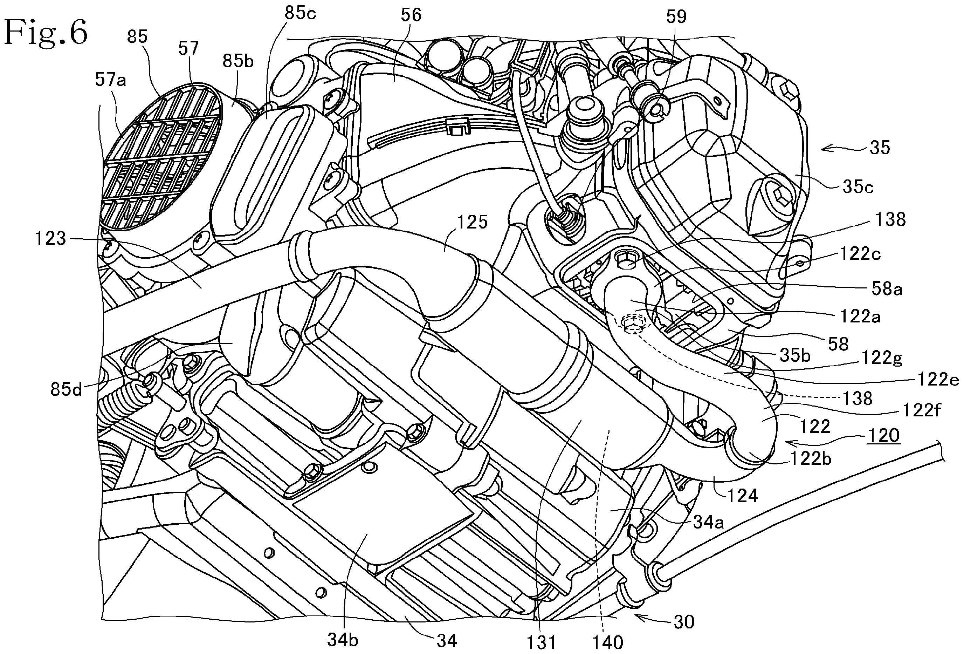

FIG. 4 shows a right side-elevational view of the unitary swing engine 13 and peripheral parts of the saddle-type vehicle 1. FIG. 5 shows a bottom view of the unitary swing engine 13 and peripheral parts of the saddle-type vehicle 1. FIG. 6 is a perspective view of the unitary swing engine 13 and peripheral parts of the saddle-type vehicle 1, as viewed from a lower right side thereof. In FIGS. 4 through 6, the side stand 52 and the central stand 51 are omitted from illustration.

As illustrated in FIGS. 4 through 6, the unitary swing engine 13 is disposed downward of the storage box 41 and rearward of the slanted portions 21 of the seat frames 20, and is supported on and suspended from the seat frames 20 by the link 38.

The link 38 includes a rod-shaped link stay 38a fixed to an upper surface of the crankcase 34 and extending transversely across the vehicle body frame 12, and a pair of joint members 38b extending from respective opposite ends of the link stay 38a forward toward the engine brackets 28. The unitary swing engine 13 is swingably coupled to the vehicle body frame 12 by the joint members 38b whose front ends are pivotally supported by the pivot shaft 39.

The cylinder assembly 35 extends forward from the crankcase 34 and is positioned between the widened portions 21a of the seat frames 20 beneath the box support frame 26. Specifically, the cylinder head 35b is positioned between the widened portions 21a, and the cylinder head cover 35c extends forward beyond the widened portions 21a. The cylinder head cover 35c is positioned rearward of the cross member 23.

The unitary swing engine 13 includes a cooling fan 55 (see FIG. 4) disposed on a side of the crankcase 34 which is opposite the arm portion 31, i.e., on one transverse side of the crankcase 34. The unitary swing engine 13 is thus of the forced-air-cooled type in which it is cooled by cooling air delivered from the cooling fan 55 as it rotates.

The cooling fan 55 is fixed to an end of the crankshaft 33 that projects transversely to one side from the crankcase 34. When the engine 30 operates, the cooling fan 55 rotates in unison with the crankshaft 33, sending cooling air to cool the engine 30.

The unitary swing engine 13 includes a shroud 56 that covers the outer side of the engine 30 for guiding cooling air from the cooling fan 55 to the engine 30. The shroud 56 has a fan cover 57 covering one side of the crankcase 34 and a cylinder cover 58 covering the cylinder assembly 35.

The fan cover 57 is mounted on the side of the crankcase 34 and covers the cooling fan 55. The fan cover 57 has an air inlet 57a defined in a side wall thereof and providing fluid communication between the inside of the fan cover 57 and the exterior of the fan cover 57.

The cylinder cover 58 is disposed in surrounding relation to the cylinder assembly 35 from around the central axis 35d thereof, and covers the cylinder assembly 35 fully circumferentially. The cylinder cover 58 has a rear end connected to the front end of the fan cover 57. The inside of the fan cover 57 is held in fluid communication with the inside of the cylinder cover 58. The cylinder cover 58 has a front end connected to the rear end of the cylinder head cover 35c, and covers the cylinder block 35a and the cylinder head 35b.

The cylinder cover 58 has a downwardly open, exhaust pipe connection hole 58a (see FIG. 5) defined in a lower wall thereof that covers a lower surface of the cylinder head 35b.

As illustrated in FIG. 4, the crankcase 34 has a front end 34a positioned rearward and downward of the rear end of the cylinder assembly 35. Specifically, the front end 34a is positioned beneath the rear end of the cylinder block 35a. The front end 34a is also positioned below the lower edge of the fan cover 57.

An oil pan 34b for storing oil for lubricating the inside of the engine 30 is disposed in a lower portion of the crankcase 34. The oil pan 34b bulges downward from the lower edge of the fan cover 57. The front end 34a of the crankcase 34 also serves as the front end of the oil pan 34b.

The unitary swing engine 13 includes an opening and closing mechanism 80 for opening and closing the air inlet 57a in the fan cover 57. The opening and closing mechanism 80 has a movable louver 81 for openably closing the air inlet 57a, an actuator 82 as a drive source for the movable louver 81, and a link mechanism 83 for transmitting driving power from the actuator 82 to the movable louver 81.

The movable louver 81 has a plurality of vanes arrayed substantially parallel to each other, and closes the air inlet 57a from within the fan cover 57. When the vanes are turned about their own axes, they selectively open or close the air inlet 57a.

The actuator 82, which is thermally sensitive, is connected as the drive source to the link mechanism 83. The actuator 82 expands or shrinks depending on the heat of the engine 30. The actuator 82 is disposed near the oil pan 34b so that it can easily detect the heat of the engine 30, and is positioned on a side surface of the lower portion of the crankcase 34.

The link mechanism 83 extends vertically on one side of the crankcase 34 and forward of the cooling fan 55, and couples the movable louver 81 and the actuator 82 to each other.

When the engine 30 is at a predetermined temperature or below, the actuator 82 operates to cause the link mechanism 83 to turn the vanes to close the air inlet 57a. In other words, the opening and closing mechanism 80 closes the air inlet 57a, allowing the engine 30 to warm itself. When the engine 30 is heated to a temperature higher than the predetermined temperature, the actuator 82 operates to cause the link mechanism 83 to turn the vanes to open the air inlet 57a. In other words, the opening and closing mechanism 80 opens the air inlet 57a, allowing the engine 30 to be cooled with air introduced through the air inlet 57a.

The fan cover 57 includes a cover body 84 mounted on the side of the crankcase 34 and covers the periphery of the cooling fan 55, and a louver cover 85 covering outer sides of the movable louver 81 and the cooling fan 55.

The louver cover 85 includes a plate-like base 85a mounted on the cover body 84, a tubular member 85b extending transversely outward from the base 85a, a link cover 85c covering the outer side of the link mechanism 83, and an actuator cover 85d covering an outer side of the actuator 82.

The air inlet 57a is in the form of an opening defined in a transversely outer end of the tubular member 85b. The opening of the air inlet 57a is fitted with a grid-like guard.

As illustrated in FIG. 2, the exhaust device 120 that discharges exhaust gases from the engine 30 includes an exhaust pipe 121 connected to the engine 30 for discharging exhaust gases from the engine 30 therethrough, a catalytic device 140 disposed in the exhaust pipe 121 for purifying exhaust gases flowing through the exhaust pipe 121, and the muffler 37 connected to the downstream end of the exhaust pipe 121.

As illustrated in FIG. 4, the exhaust device 120 that includes the catalytic device 140 is disposed in a space R below the cylinder assembly 35 and the crankcase 34. Since the exhaust device 120 is fixed to the unitary swing engine 13, as will be described later, the exhaust device 120 can swing in unison with the unitary swing engine 13 about the pivot shaft 39.

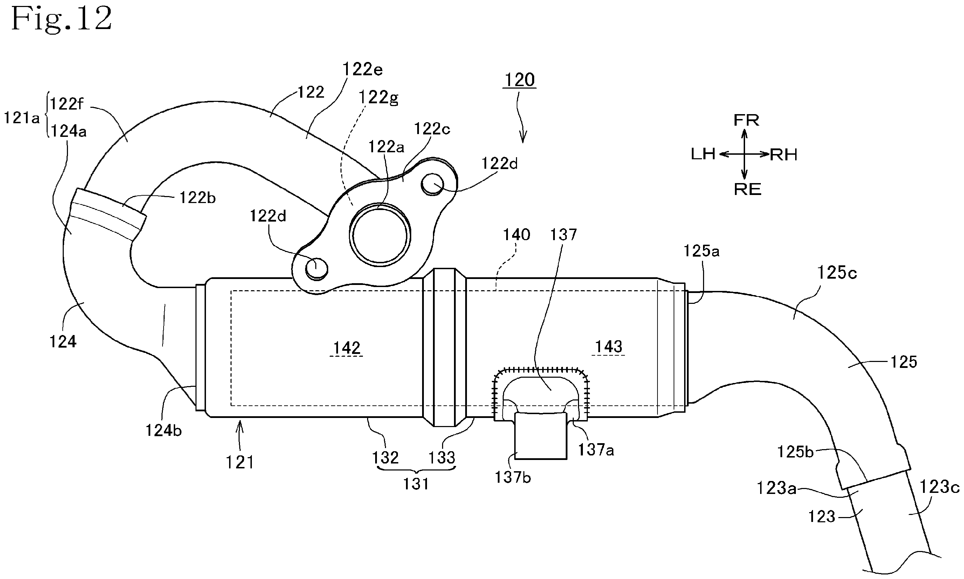

As illustrated in FIGS. 3 and 12, the exhaust pipe 121 includes an upstream exhaust pipe 122 connected to the exhaust port 30c defined in the lower surface of the cylinder head 35b, a catalyst case 131 housing the catalytic device 140 therein, a downstream exhaust pipe 123 disposed downstream of the catalyst case 131, an upstream joint pipe 124 interconnecting a downstream end 122b of the upstream exhaust pipe 122 and an upstream end of the catalyst case 131, and a downstream joint pipe 125 interconnecting a downstream end of the catalyst case 131 and an upstream end 123a of the downstream exhaust pipe 123. The downstream exhaust pipe 123 has a downstream end 123b connected to the muffler 37.

Exhaust gases discharged from the engine 30 flow from the exhaust port 30c through the upstream exhaust pipe 122 and the upstream joint pipe 124 into the catalytic device 140 in the catalyst case 131. After the exhaust gases are purified by the catalytic device 140, the exhaust gases flow through the downstream joint pipe 125 and the downstream exhaust pipe 123 into the muffler 37. The exhaust gases are then discharged from the muffler 37 into the ambient air.

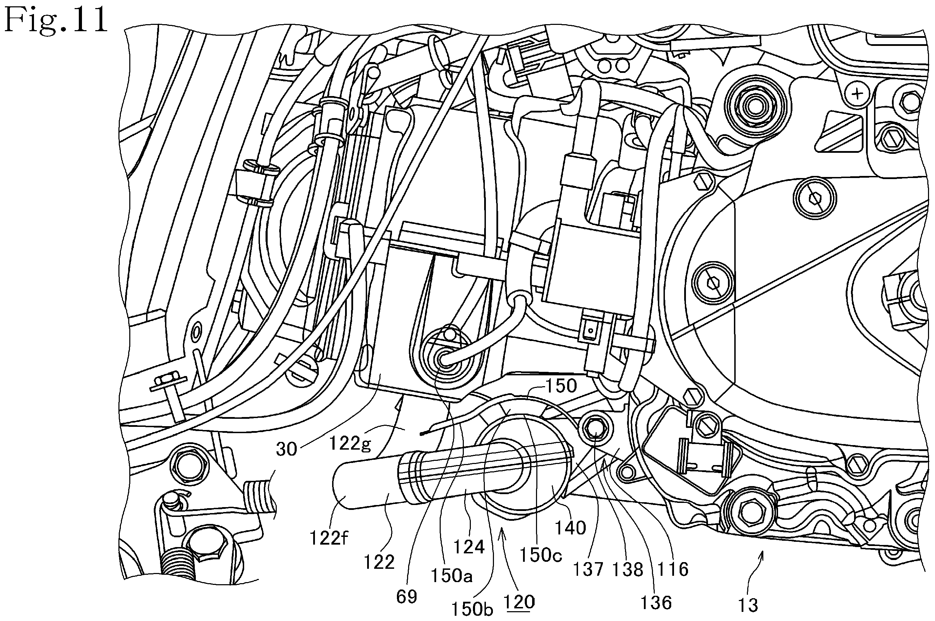

As illustrated in FIGS. 4 and 5, the cylinder head 35b has on a lower surface thereof an exhaust pipe joint 35e at the downstream end of the exhaust port 30c. The exhaust pipe 121 has an upstream portion joined to the exhaust pipe joint 35e. As illustrated in FIG. 6, a first oxygen sensor 59 for detecting oxygen in the exhaust gases flowing through the exhaust port 30c is mounted on the cylinder head 35b on one side of the exhaust pipe joint 35e. As illustrated in FIG. 11, an oil temperature sensor 69 for detecting the temperature of the oil in the cylinder head 35b is mounted on the cylinder head 35b on the other side of the exhaust pipe joint 35e.

As illustrated in FIGS. 5, 6, 11, and 12, the upstream exhaust pipe 122 includes a vertical portion 122g extending downward from the exhaust pipe joint 35e of the cylinder head 35b, a side extension 122e extending from the downstream end of the vertical portion 122g laterally toward one transverse side of the crankcase split plane CS in front of the catalytic device 140, and a curved portion 122f extending from the downstream end of the side extension 122e and curved rearward on the transverse side of the crankcase split plane CS. The curved portion 122f of the upstream exhaust pipe 122 is connected to a curved portion 124a of the upstream joint pipe 124, jointly providing a U-shaped curved portion 121a.

As illustrated in FIGS. 5 and 12, a flange 122c attached to the exhaust pipe joint 35e of the cylinder head 35b is fixed to an upstream end 122a of the upstream exhaust pipe 122. The flange 122c has a pair of bolt insertion holes 122d defined therein. The upstream end 122a of the upstream exhaust pipe 122 is fastened to the exhaust pipe joint 35e of the cylinder head 35b by bolts 138 passed through the bolt insertion holes 122d in the flange 122c. As illustrated in FIGS. 5 and 6, The upstream end 122a of the upstream exhaust pipe 122 is connected to the exhaust pipe joint 35e through an exhaust pipe connection hole 58a defined in the cylinder cover 58.

As illustrated in FIG. 5, the exhaust pipe joint 35e that is connected to the upstream end 122a of the upstream exhaust pipe 122 is positioned on the hypothetical line C that extends in and along the crankcase split plane CS. The side extension 122e extends from the longitudinal center line of the saddle-type vehicle 1 toward one transverse side thereof which is opposite the side where the muffler 37 is positioned. Specifically, the side extension 122e extends obliquely forward toward one transverse side of the saddle-type vehicle 1.

As illustrated in FIG. 5, the curved portion 121a of the exhaust pipe 121 and the catalytic device 140 are positioned transversely inward of the widened portions 21a of the seat frame 20 on both the transverse sides of the crankcase split plane CS.

The catalytic device 140 and the catalyst case 131 that houses the catalytic device 140 therein will be described in detail below.

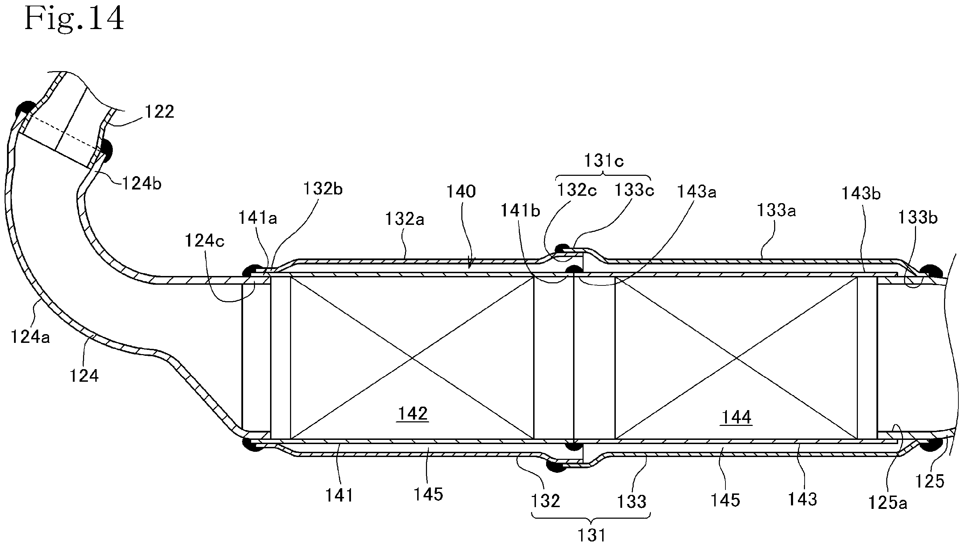

As illustrated in FIG. 14, the catalytic device 140 includes a plurality of catalysts 142 and 144 and a plurality of catalyst holders 141 and 143 that hold the respective catalysts 142 and 144. The catalysts 142 and 144 will also be referred to as first and second catalysts, respectively, that are successively positioned with respect to the direction along which exhaust gases flow through the catalytic device 140. The catalyst holders 141 and 143 will also be referred to as first and second catalyst holders, respectively. Though the catalytic device 140 used in the present embodiment is illustrated as having the two catalysts 142 and 144, the catalytic device 140 may have a plurality of catalysts rather than two catalysts.

Each of the first and second catalysts 142 and 144 is of a honeycomb porous structure having a number of pores extending along its longitudinal central axis, and carries a catalytic element such as platinum, rhodium, or palladium, for example, for decomposing exhaust gas components.

The first and second catalysts 142 and 144 are held respectively by the first and second catalyst holders 141 and 143, which are of a hollow cylindrical shape each. The first and second catalyst holders 141 and 143 are axially longer than the first and second catalysts 142 and 144 in the direction along which exhaust gases flow through the catalytic device 140. Therefore, the first and second catalyst holders 141 and 143 have opposite ends 141a, 141b, 143a, and 143b that do not hold the first and second catalysts 142 and 144.

The first and second catalyst holders 141 and 143 are of the same diameter. The first catalyst holder 141 that holds the first catalyst 142 and the second catalyst holder 143 that holds the second catalyst 144 have upstream and downstream ends, respectively, which abut against each other and are joined by welding to each other circumferentially into a unitary assembly in the catalytic device 140.

The upstream joint pipe 124 that is connected to an upstream end of the catalytic device 140 has a downstream end 124c having such a diameter as to fit in the upstream end 141a of the first catalyst holder 141. The downstream joint pipe 125 that is connected to a downstream end of the catalytic device 140 has an upstream end 125a having such a diameter as to fit in the downstream end 143b of the second catalyst holder 143.

The catalyst case 131 is divided into a plurality of case members. According to the present embodiment, since the catalytic device 140 has the two catalysts 142 and 144, the catalyst case 131 is illustrated as being divided into two case members. However, the catalyst case 131 may be divided into as many case members as the number of catalysts incorporated in the catalytic device 140, rather than the two case members.

As illustrated in FIGS. 12 and 14, the catalyst case 131 used in the present embodiment is divided into a first catalyst case member 132 and a second catalyst case member 133. The downstream end 143b of the second catalyst holder 143 abuts against and slidably held on a radially outward surface of the upstream end 125a of the downstream joint pipe 125.

As illustrated in FIG. 14, the first catalyst case member 132 and the second catalyst case member 133 have respective hollow cylindrical case portions 132a and 133a that are larger in diameter than the first and second catalyst holders 141 and 143. The case portions 132a and 133a and the first and second catalyst holders 141 and 143 are radially spaced from each other by a clearance 145 therebetween and hence are held out of contact with each other.

The case portions 132a and 133a have respective reduced-diameter portions 132b and 133b on respective upstream and downstream ends thereof. The reduced-diameter portions 132b and 133b are smaller in diameter than the remainder of the case portions 132a and 133a.

The reduced-diameter portion 132b of the first catalyst case member 132 is of such a diameter as to fit over the upstream end 141a of the first catalyst holder 141. The reduced-diameter portion 132b of the first catalyst case member 132, the upstream end 141a of the first catalyst holder 141, and the downstream end 124c of the upstream joint pipe 124 that is fitted in the upstream end 141a of the first catalyst holder 141 are joined together by a three-layer welding process.

The reduced-diameter portion 133b of the second catalyst case member 133 is of such a diameter as to fit over the upstream end 125a of the downstream joint pipe 125. The reduced-diameter portion 133b of the second catalyst case member 133 and the upstream end 125a of the downstream joint pipe 125 that is fitted in the reduced-diameter portion 133b of the second catalyst case member 133 are joined together by a welding process.

The case portion 132a and the case portion 133a have respective downstream and upstream ends as increased-diameter portions 132c and 133c that are larger in diameter than the remainder of the case portions 132a and 133a. The increased-diameter portions 132c and 133c jointly make up an increased-diameter portion 131c of the catalyst case 131.

The increased-diameter portion 132c of the first catalyst case member 132 and the increased-diameter portion 133c of the second catalyst case member 133 are of such diameters as to be fitted one over the other. According to the present embodiment, the increased-diameter portion 133c is larger in diameter than the increased-diameter portion 132c. However, the increased-diameter portion 132c may be larger in diameter than the increased-diameter portion 133c. The increased-diameter portions 132c and 133c that are fitted one over the other are joined together by a welding process.

As illustrated in FIG. 3, the catalyst case 131 is positioned beneath the engine 30 and has its longitudinal axis oriented transversely across the saddle-type vehicle 1.

As illustrated in FIG. 12, the downstream joint pipe 125 that is connected to the downstream end of the catalyst case 131 has a downstream end 125b connected to the upstream end 123a of the downstream exhaust pipe 123. As illustrated in FIGS. 5 and 6, the downstream joint pipe 125 extends leftward from the catalyst case 131 and then is curved rearward. As illustrated in FIG. 2, the downstream exhaust pipe 123 extends to the muffler 37 that is positioned near the rear wheel 3, and has the downstream end 123b joined to a front surface of the muffler 37 in fluid communication with the inside of the muffler 37.

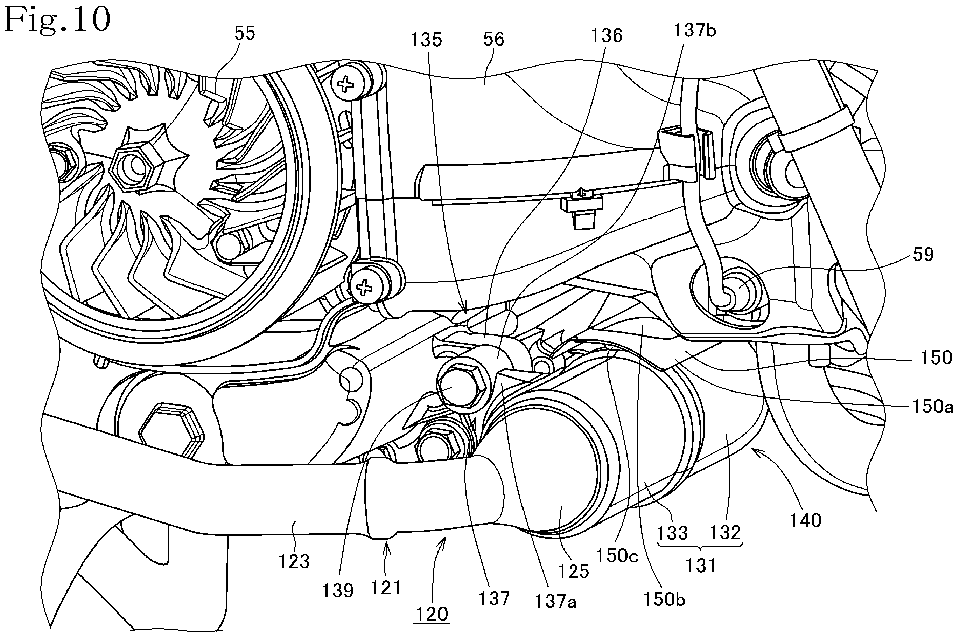

As illustrated in FIGS. 10, 11, and 13, a heat insulation plate 150 for preventing heat from the engine 30 from being transmitted excessively to the catalytic device 140 is attached to an upper surface of the catalyst case 131. The heat insulation plate 150 includes a plate-like member 150a curved along an outer circumferential surface of the catalyst case 131. The heat insulation plate 150 has an elliptical recess 150b defined therein whose bottom surface 150c is joined to the upper surface of the catalyst case 131. Therefore, the area of contact between the heat insulation plate 150 and the catalyst case 131 is relatively small.

As illustrated in FIG. 10, the saddle-type vehicle 1 includes an exhaust device joint 135 that joins the crankcase 34 and the exhaust device 120 to each other, so that the crankcase 34 supports the exhaust device 120. The exhaust device joint 135 is made up of a crankcase stay 136 extending forward from a front surface of the crankcase 34 of the unitary swing engine 13 and an exhaust device stay 137 extending rearward from a downstream side of the catalyst case 131, the crankcase stay 136 and the exhaust device stay 137 being joined to each other. As illustrated in FIGS. 5 and 10, the crankcase stay 136 and the exhaust device stay 137 are transversely offset from each other and joined to each other in transversely overlapping relationship to each other.

The crankcase stay 136 projects forward from a lower portion of the crankcase 34 and has a bolt insertion hole, not depicted, defined centrally in a distal end thereof.

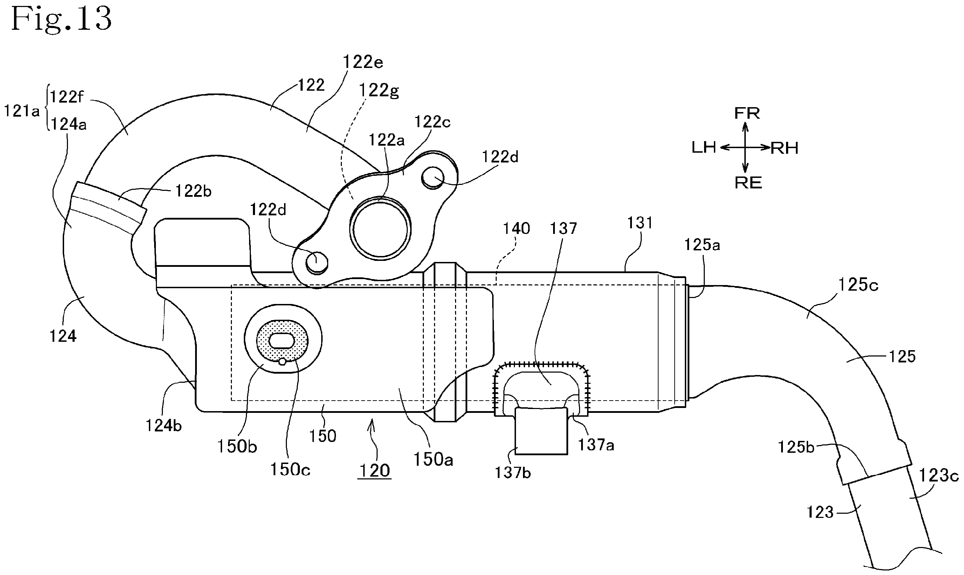

As illustrated in FIGS. 12 and 13, the exhaust device stay 137 is welded to a rear surface of the second catalyst case member 133 of the catalyst case 131. As shown in FIG. 10, the exhaust device stay 137 is made up of a support member 137a, which is of a substantially triangular shape as viewed in side elevation, on the second catalyst case member 133 and a hollow cylindrical attachment member 137b fixed to the support member 137a. The attachment member 137b has a bolt insertion hole, not depicted, formed centrally therein.

A bolt 139 is inserted through the bolt insertion hole in the crankcase stay 136 and the bolt insertion hole in the exhaust device stay 137, and threaded into a nut, not depicted, so that the exhaust device 120 is firmly supported on the unitary swing engine 13.

Since the exhaust device 120 is supported on the unitary swing engine 13 by the exhaust device joint 135, as illustrated in FIG. 10, the catalytic device 140 that is housed in the catalyst case 131 of the exhaust device 120 is arranged as follows:

As illustrated in FIG. 4, the catalytic device 140 is disposed in the space R forward of the front end 34a of the crankcase 34 and below the cylinder assembly 35. In the space R, the catalytic device 140 has a longitudinal central axis 140a (see FIG. 5) oriented transversely across the saddle-type vehicle 1, i.e., oriented substantially horizontally in directions substantially perpendicular to the hypothetical line C in and along the crankcase split plane CS, as depicted in FIG. 5. Stated otherwise, the central axis 140a of the catalytic device 140 extends substantially parallel to the crankshaft 33 of the engine 30. The first and second catalysts 142 and 144 are disposed coaxially with the central axis 140a of the catalytic device 140 that extends substantially parallel to the crankshaft 33. In other words, the first and second catalysts 142 and 144 have their longitudinal axes oriented transversely across the saddle-type vehicle 1 and are disposed on the central axis 140a substantially parallel to the crankshaft 33. The first and second catalysts 142 and 144 overlap each other as viewed in side elevation transversely across the saddle-type vehicle 1.

According to the present embodiment, the central axis 140a of the catalytic device 140 is illustrated as being oriented substantially parallel to the crankshaft 33. The central axis 140a of the catalytic device 140 may not be oriented exactly parallel to the crankshaft 33, but may be oriented generally transversely across the saddle-type vehicle 1. Insofar as the central axis 140a of the catalytic device 140 is generally transversely across the saddle-type vehicle 1, the central axis 140a may not extend horizontally, but may be oblique to a horizontal direction.

Specifically, the catalytic device 140 is disposed forward of the front end 34a of the crankcase 34 and rearward of the exhaust pipe joint 35e of the cylinder head 35b. Furthermore, the catalytic device 140 is positioned upward of the lower surface of a front end portion of the oil pan 34b and downward of lower surfaces of the cylinder block 35a and the cylinder head 35b. Moreover, the catalytic device 140 is positioned below or downward of the widened portions 21a of the seat frames 20, and, as illustrated in FIG. 5, is positioned between transversely outer ends 21b of the widened portions 21a. As illustrated in FIG. 1, the catalytic device 140 is disposed above a hypothetical straight line U1 that interconnects a rear lower end of the lower cover 48 and a lower end of the crankcase 34 of the unitary swing engine 13.

The catalytic device 140 is also disposed between the upstream exhaust pipe 122 and the front end 34a of the crankcase 34. Furthermore, the catalytic device 140 is disposed in a transversely offset position such that it has a central transverse axis 140b oriented longitudinally of the saddle-type vehicle 1 and positioned on one transverse side of the hypothetical line C in and along the crankcase split plane CS, i.e., the side where the muffler 37 is positioned.

The catalytic device 140 is positioned transversely inward of the widened portion 21a of the seat frame 20 on one transverse side of the crankcase split plane CS.

As illustrated in FIG. 4, the catalytic device 140 is disposed in an area between a hypothetical line L1 that interconnects the pivot shaft 39 by which the link 38 is coupled to the engine brackets 28 and the front end 34a of the crankcase 34 and a hypothetical line L2 that interconnects the exhaust pipe joint 35e of the cylinder head 35b to which the upstream end of the upstream exhaust pipe 122 of the exhaust device 120 is connected and the pivot shaft 39. The hypothetical line L2 extends through a front end of the exhaust pipe joint 35e. To put it differently, the catalytic device 140 is disposed in a position forward of the front end 34a of the crankcase 34, in which at least part of the catalytic device 140 overlaps the cylinder assembly 35 as viewed in plan. According to the present embodiment, since the link 38 is disposed above the crankcase 34, a space is available beneath the cylinder assembly 35 and in the area between the hypothetical lines L1 and L2, and the catalytic device 140 can be placed in the space. Therefore, the catalytic device 140 can be placed in a compact layout out of physical interference with other parts around the catalytic device 140.

More specifically, as the catalytic device 140 is disposed between the exhaust pipe joint 35e of the cylinder head 35b and the front end 34a of the crankcase 34, the catalytic device 140 can be placed in a compact layout through effective use of a space between the upstream exhaust pipe 122 and the front end 34a of the crankcase 34 while keeping a space for placing therein the upstream exhaust pipe 122 that extends from the exhaust pipe joint 35e.

Furthermore, as will be understood from FIG. 5, inasmuch as the exhaust device 120 includes the side extension 122e and the curved portion 122f and extends transversely remotely from the muffler 37 and is folded back and connected to the catalytic device 140, the length of the upstream exhaust pipe 122 is made as large as required by the characteristics of the engine 30.

Moreover, since the central transverse axis 140b of the catalytic device 140, which is oriented longitudinally of the saddle-type vehicle 1, is offset from the hypothetical line C in and along the crankcase split plane CS toward the muffler 37, the length of the upstream exhaust pipe 122 is increased.

Downstream of the catalytic device 140, as depicted in FIGS. 12 and 13, the downstream joint pipe 125 includes a bent portion 125c extending from the upstream end 125a toward one transverse side of the saddle-type vehicle 1 and then bent rearward to the downstream end 125b thereof. The downstream exhaust pipe 123 includes a rearward extension 123c extending rearward from the upstream end 123a thereof that is connected to the downstream end 125b of the downstream joint pipe 125. The rearward extension 123c extends rearward below the fan cover 57 to the downstream end 123b of the downstream exhaust pipe 123 that is connected to an inlet defined in a front end 37b of the muffler 37.

A second oxygen sensor 65 (see FIG. 4) for detecting oxygen in the exhaust gases flowing through the downstream exhaust pipe 123 is mounted on the downstream exhaust pipe 123. The second oxygen sensor 65 mounted on the downstream exhaust pipe 123 that extends downstream of the catalytic device 140 is capable of detecting the concentration of oxygen in the exhaust gases that have passed through the catalytic device 140.

As illustrated in FIG. 4, the cylinder cover 58 of the shroud 56 is inclined forward and upward in alignment with the central axis 35d of the cylinder assembly 35. The cylinder cover 58 has a lower surface slanted progressively forward and upward from a position behind the catalytic device 140 over the catalytic device 140.

The lower surface of the cylinder cover 58 has an undercut 58b defined in a portion thereof which faces the catalytic device 140. The undercut 58b is upwardly recessed clear of an upper surface of the catalytic device 140. The undercut 58b is positioned rearward of the exhaust pipe connection hole 58a. Since the undercut 58b keeps the catalytic device 140 and the cylinder cover 58 spaced a distance from each other, adverse effects that the heat from the catalytic device 140 has on the cylinder cover 58 are reduced though the catalytic device 140 is disposed below the cylinder assembly 35.

FIG. 7 is a fragmentary left side-elevational view of the side stand 52, the catalytic device 140, and peripheral parts of the saddle-type vehicle 1. As illustrated in this figure, when the side stand 52 is angularly moved about the side stand pivot shaft 52a into the retracted position, the side stand 52 that is rod-shaped extends longitudinally of the saddle-type vehicle 1, and has its most part except for its front end portion overlapping the upstream exhaust pipe 122 and the catalytic device 140 as viewed transversely from outside. Therefore, the side stand 52, when in the retracted position, can protect the upstream exhaust pipe 122 and the catalytic device 140 sideways, and make the upstream exhaust pipe 122 and the catalyst case 131 hardly visible for a better appearance.

The side stand 52 includes an operating member 52b extending transversely outward from a longitudinally intermediate portion thereof when the side stand 52 is in the retracted position. The operating member 52b has a transversely outer end portion bent upward. When the rider operates the side stand 52, the rider puts their foot on the operating member 52b to operate the side stand 52. When the side stand 52 is in the retracted position, the operating member 52b overlaps the upstream exhaust pipe 122 sideways from outside, so that the operating member 52b makes the upstream exhaust pipe 122 hardly visible and protects the upstream exhaust pipe 122.

As illustrated in FIG. 1, when the central stand 51 is in the retracted position, the feet 51b on the lower ends thereof serve as a reference point for the minimum ground clearance of the saddle-type vehicle 1. The feet 51b are positioned respectively on the left and right sides of the rear wheel 3. When the saddle-type vehicle 1 is banked to the left or right, the corresponding one of the feet 51b initially touches the ground.

The catalytic device 140 is disposed upward of the feet 51b of the central stand 51. Therefore, even though the catalytic device 140 is disposed below the cylinder assembly 35, the catalytic device 140 is in a position sufficiently higher than the ground.

As illustrated in FIGS. 3, 4 and 5, the cross member 23 is disposed forward of the upstream exhaust pipe 122 and the catalytic device 140 and upward of the upstream exhaust pipe 122 and the catalytic device 140. A horizontal line H (see FIG. 4) that extends rearward from the lower end of the cross member 23 horizontally overlaps an upper portion of the catalytic device 140. The catalytic device 140 overlaps the cross member 23 longitudinally of the saddle-type vehicle 1. In other words, as viewed in front elevation, the cross member 23 has a lower portion overlapping the upstream exhaust pipe 122 and the catalytic device 140 as viewed from the front side thereof. Therefore, the cross member 23 can protect the upstream exhaust pipe 122 and the catalytic device 140 from the front side thereof.

The step floor 11 has a rear end portion supported from below by the support frames 27. The support frames 27 also support respective tandem steps 27a (see FIGS. 3 and 4) for a passenger who sits on a rear seat portion of the rider's seat 10. The support frames 27 are positioned transversely outward of the catalytic device 140 at respective positions overlapping the catalytic device 140 as viewed transversely. Therefore, even if the saddle-type vehicle 1 is turned over laterally, the support frames 27 are effective to protect the catalytic device 140 since one of the support frames 27 initially touches the ground.

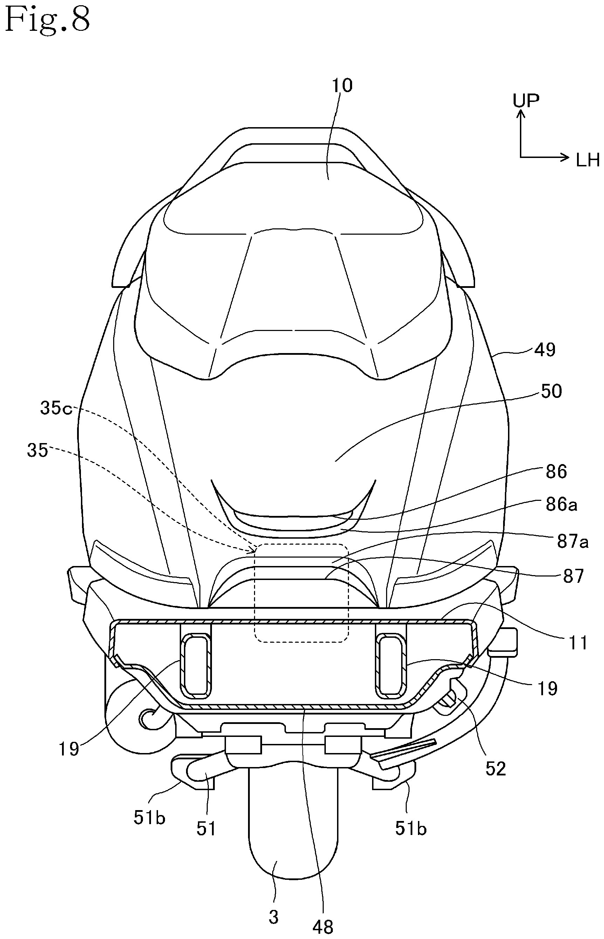

FIG. 8 is a cross-sectional view taken along line VIII-VIII of FIG. 1. In FIG. 8, only the lower frames 19 are illustrated in a space between the step floor 11 and the lower cover 48, with other parts in the space being omitted from illustration.

As illustrated in FIGS. 1 and 8, the central lower cover 50 that is disposed below the front end of the rider's seat 10 has an upper opening 86 and a lower opening 87 defined therein that extend therethrough. The upper opening 86 is in the form of a slit extending transversely across the central lower cover 50 and is positioned forward and upward of the cylinder assembly 35. The upper opening 86 is partly defined by a lower wall 86a extending rearward and upward from a lower edge of the marginal periphery provided around the upper opening 86.

Part of ram air flowing against the saddle-type vehicle 1 as it travels is introduced from the upper opening 86 into the central lower cover 50, guided by the lower wall 86a to flow rearward and upward, and discharged out of the vehicle body cover 16 after flowing rearward along an upper surface of the unitary swing engine 13. The ram air thus flowing along upper surface of the unitary swing engine 13 blows away dust particles, etc. that have been deposited on peripheral surfaces of the unitary swing engine 13.

The lower opening 87 is in the form of a slit extending transversely across the central lower cover 50 and is positioned below the upper opening 86. As illustrated in FIGS. 1 and 8, the lower opening 87 is positioned forward of the cylinder assembly 35 and downward of an upper end of the cylinder assembly 35 at the uppermost end of the unitary swing engine 13.

The lower opening 87 is partly defined by an upper wall 87a extending rearward and downward from an upper edge of the marginal periphery provided around the lower opening 87. The upper wall 87a is inclined rearward and downward toward the catalytic device 140.

Part ram air flowing against the saddle-type vehicle 1 as it travels is introduced from the lower opening 87 into the central lower cover 50, guided by the upper wall 87a to flow rearward and downward, and discharged out of the vehicle body cover 16 after flowing rearward around the catalytic device 140 along a lower surface of the unitary swing engine 13. The ram thus flowing around the catalytic device 140 is effective to cool the catalytic device 140.

As illustrated in FIG. 5, the cylinder cover 58 of the shroud 56 has an air guide port defined in a lower wall thereof for guiding cooling air from the cooling fan 55 to the catalytic device 140. The air guide port is positioned in overlapping relation to the catalytic device 140 in the bottom view. The air guide port is contiguous to the exhaust pipe connection hole 58a. However, the air guide port 88 may be separate from the exhaust pipe connection hole 58a.

When the cooling fan 55 is actuated, it introduces cooling air from the air inlet 57a (see FIG. 6) into the shroud 56. The introduced cooling air flows through the shroud 56 while cooling the cylinder assembly 35, and is discharged out of the shroud 56 through the exhaust pipe connection hole 58a and the air guide port 88. After being discharged through the air guide port 88, the cooling air impinges upon the catalytic device 140, cooling the catalytic device 140. The cooling air from the cooling fan 55 is thus effective to cool the catalytic device 140.

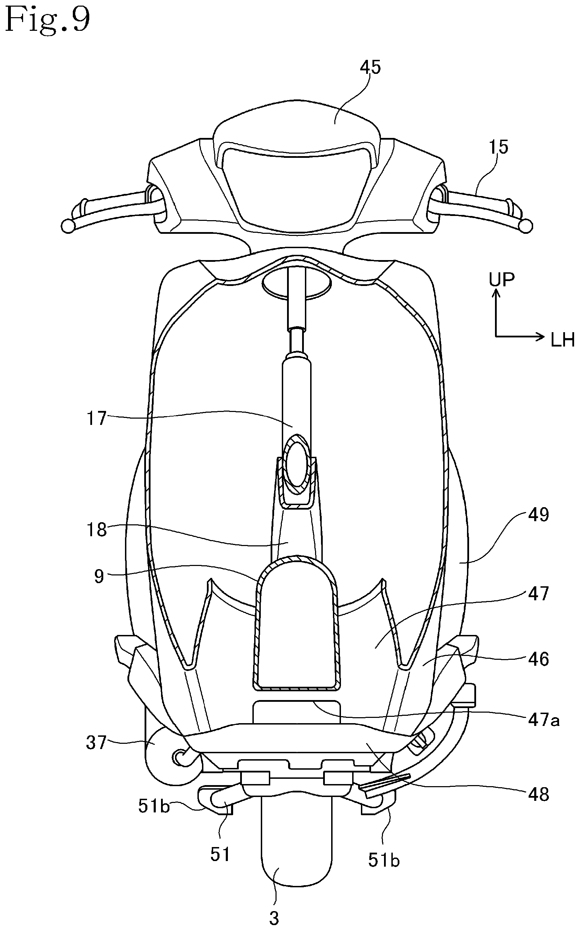

FIG. 9 is a sectional view taken along line IX-IX of FIG. 1.

As depicted in FIG. 9, the leg shield 47 has a front opening 47a defined in a lower end portion thereof and extending therethrough longitudinally of the saddle-type vehicle 1. The leg shield 47 covers a front side of the legs of the rider who sits on the rider's seat 10.

The front opening 47a is positioned behind the front wheel 2 and below a rear end of the front fender 9. The front opening 47a makes a space (see FIG. 8) between the step floor 11 and the lower cover 48 to open forward. The step floor 11 extends rearward to a position where it overlaps a front end of the unitary swing engine 13 as viewed in side elevation. The space between the step floor 11 and the lower cover 48 has a rear end that is open toward the lower surface of the cylinder assembly 35.

Part of ram air flowing against the saddle-type vehicle 1 as it travels is introduced from the front opening 47a into the space between the step floor 11 and the lower cover 48, flows rearward through the space, and impinges upon the catalytic device 140 beneath the cylinder assembly 35. Consequently, the ram air flowing from the front opening 47a is effective to cool the catalytic device 140.

According to the embodiment of the present invention, as described above, the saddle-type vehicle 1 includes the vehicle body frame 12, the unitary swing engine 13 including the cylinder assembly 35 and the crankcase 34 that are disposed substantially horizontally, the unitary swing engine 13 being swingably supported on the vehicle body frame 12 by the link 38, the exhaust device 120 connected to the unitary swing engine 13, and the catalytic device 140 disposed in the exhaust pipe 121. The link 38 is disposed upward of the unitary swing engine 13. The catalytic device 140 is disposed downward of the cylinder assembly 35 as viewed in side elevation. The catalytic device 140 is positioned in the area between the hypothetical line L1 that interconnects the pivot shaft 39 by which the link 38 is coupled to the vehicle body frame 12 and the front end 34a of the crankcase 34 and the hypothetical line L2 that interconnects the exhaust pipe joint 35e of the unitary swing engine 13 to which the end of the exhaust device 120 is connected and the pivot shaft 39. The saddle-type vehicle 1 includes the exhaust device joint 135 that joins the crankcase 34 and the exhaust device 120 to each other. The catalytic device 140 includes a plurality of catalysts, i.e., the first catalyst 142 and the second catalyst 144. Of the first and second catalysts 142 and 144, the first catalyst 142 that is disposed upstream in the exhaust pipe 121 is disposed forward of the crankcase 34 and downward of the cylinder assembly 35, and is disposed near the exhaust port 30c of the unitary swing engine 13 as viewed in bottom view.

At least part of the first catalyst 142 overlaps the hypothetical line C in and along the crankcase split plane CS as viewed in bottom view, and the second catalyst 144 is disposed in a transversely offset position from the hypothetical line C in and along the crankcase split plane CS as viewed in bottom view. The second catalyst 144 is disposed in a position spaced more from the exhaust port 30c of the unitary swing engine 13 than the first catalyst 142 as viewed in bottom view.

The catalysts 142 and 144 are therefore disposed in a compact layout, and the catalytic device 140 is stably and firmly supported in position. As the first catalyst 142 that is disposed upstream in the exhaust pipe 121 is disposed closely to the exhaust port 30c, the catalytic device 140 can be activated early for an increased ability to purify exhaust gases.

Furthermore, since the link 38 is disposed upward of the unitary swing engine 13, a space is created below the unitary swing engine 13 for the catalytic device 140 to be disposed therein. Because the catalytic device 140 is disposed in the area between the hypothetical line L1 that interconnects the pivot shaft 39 and the front end 34a of the crankcase 34 and the hypothetical line L2 that interconnects the exhaust pipe joint 35e and the pivot shaft 39, the catalytic device 140 can be placed in a compact layout out of physical interference with other parts around the catalytic device 140. As the crankcase 34 and the exhaust device 120 are joined to each other by the exhaust device joint 135, even when the exhaust pipe 121 and the catalytic device 140 swing in unison with the unitary swing engine 13, the catalytic device 140 can be stably supported during the swinging movement of the unitary swing engine 13.

The exhaust device 120 includes the catalyst case 131 that houses the catalytic device 140 therein. The first catalyst 142 and the second catalyst 144 are housed respectively in the first catalyst holder 141 and the second catalyst holder 143. The first catalyst holder 141 and the second catalyst holder 143 that is disposed adjacent thereto are joined to each other by welding. The catalyst case 131 has an increased-diameter portion 131c (132c, 133c) projecting radially outward out of physical interference with the welded portions of the first and second catalyst holders 141 and 143. When the catalytic device 140 is disposed in the limited space forward of the crankcase 34 and downward of the cylinder assembly 35, the catalytic device 140 that includes the first and second catalysts 142 and 144 can be disposed in a compact layout, since only the increased-diameter portion 131c of the catalyst case 131 has an increased diameter, and the remainder of the catalyst case 131 has no increased diameter, while the first and second catalysts 142 and 144 are joined to each other therein,.

The exhaust device joint 135 is made up of the crankcase stay 136 on the crankcase 34, the exhaust device stay 137 on the catalyst case 131, and the bolt 139 as a fastening member by which the crankcase stay 136 and the exhaust device stay 137 are joined to each other.

Inasmuch as only the increased-diameter portion 131c of the catalyst case 131 has an increased diameter and the catalyst case 131 does not need to have an increased diameter in its entirety, the outer profile of the catalyst case 131 does not need to have an increased diameter except for the increased-diameter portion 131c, so that the catalyst case 131 does not have a more gradually curved surface. The exhaust device stay 137 on an outer surface of the catalyst case 131 is thus able to hold the catalyst case 131 stably. As the exhaust device stay 137 holds the catalyst case 131 stably, the exhaust device stay 137 may be welded to the catalyst case 131 in a small range.

The crankcase stay 136 and the exhaust device stay 137 are transversely offset from each other and joined to each other in transversely overlapping relationship to each other. Consequently, the exhaust device joint 135 has an increased supporting rigidity.

The crankcase 34 is divided into left and right crankcase members by the crankcase split plane CS. The exhaust pipe 121 of the exhaust device 120 includes the vertical portion 122g extending downward from the exhaust pipe joint 35e of the cylinder head 35b, the side extension 122e extending from the downstream end of the vertical portion 122g laterally toward one transverse side of the crankcase split plane CS, and the U-shaped curved portion 121a contiguous to the side extension 122e. Since the crankcase stay 136 is disposed on the other transverse side of the crankcase split plane CS, the exhaust pipe 121 extends only to one side of the crankcase split plane CS, making the weight of the exhaust device 120 out of balance. However, the crankcase stay 136 disposed on the other side of the crankcase split plane CS allows the catalytic device 140 to be stably supported on the unitary swing engine 13.

Furthermore, the catalytic device 140 has its longitudinal axis oriented transversely across the saddle-type vehicle 1, and the exhaust device joint 135 and the exhaust pipe joint 35e that interconnects the exhaust pipe 121 and the cylinder assembly 35 are disposed one on each side of the central transverse axis 140b of the catalytic device 140, as viewed in bottom view. Therefore, the central transverse axis 140b is positioned between the exhaust pipe joint 35e that interconnects the exhaust pipe 121 and the cylinder assembly 35 and the exhaust device joint 135 that joins the exhaust device 120 to the crankcase 34. Consequently, the catalytic device 140 is stably supported on the unitary swing engine 13.

While the preferred embodiment of the present invention has been described above, the present invention is not limited to the embodiment described above and is only limited by the scope of the appended claims Various changes and modifications may be made in the embodiment without departing from the scope of the invention as defined in the appended claims. The saddle-type vehicle, the internal combustion engine, and various components thereof can be embodied in various manners within the scope of the invention as defined in the appended claims.

Certain components of the saddle-type vehicle have been illustrated as being arranged in left and right layouts in the above embodiment. However, components which are arranged in different left and right layouts may also be covered by the invention as long as they fall within the scope of the invention as defined in the appended claims.

### [Description of Reference Symbols]

1···Saddle-type vehicle, 10···Rider's seat, 11···Step floor, 12···Vehicle body frame, 13···Unitary swing engine, 19···Lower frame,
21a···Widened portion, 21b···Transversely outer end, 23···Cross member
33···Crankshaft, 34···Crankcase, 34a···Front end, 35···Cylinder assembly, 35e···Exhaust pipe joint, 37···Muffler, 38···Link, 39···Pivot shaft or link joint,
47···Leg shield, 47a···Front opening,
50···Central lower cover, 51···Central stand, 51b···Foot, 52···Side stand, 55···Cooling fan, 56···Shroud, 57···Fan cover, 58b···Undercut,
120···Exhaust device, 121···Exhaust pipe, 121a···Curved portion, 122e···Side extension, 122g···Vertical portion, 131···Catalyst case,
135···Exhaust device joint, 136···Crankcase stay, 137···Exhaust device stay,
140···Catalytic device, 140b···Central transverse axis, 141···Catalyst holder, 141a···Upstream end, 141b···Downstream end, 145···Clearance, C···Hypothetical line extending in and along crankcase split plane, CS···Crankcase split plane.

## Claims

1. A saddle-type vehicle comprising:
a vehicle body frame (12);
a unitary swing engine (13) including a cylinder assembly (35) and a crankcase (34) which are disposed substantially horizontally, the unitary swing engine (13) being swingably supported on the vehicle body frame (12) by a link (38); and
an exhaust device (120) connected to the unitary swing engine (13) and having an exhaust pipe (121) and a catalytic device (140) disposed in the exhaust pipe (121); wherein:
the link (38) is disposed upward of the crankcase (34) ;
at least part of the catalytic device (140) is disposed downward of the cylinder assembly (35) as viewed in side elevation;
the catalytic device (140) is positioned in an area between a hypothetical line (L1) interconnecting a link joint (39) by which the link (38) is coupled to the vehicle body frame (12) and a front end of the crankcase (34) and a hypothetical line (L2) interconnecting the link joint (39) and an exhaust pipe joint (35e) of the unitary swing engine (13) to which an end of the exhaust device (120) is connected;
the exhaust device (120) includes a catalyst case (131) housing the catalytic device (140) therein;
the catalytic device (140) includes a plurality of catalysts including first and second catalysts (142, 144) ;
the first catalyst (142) being disposed upstream in the exhaust pipe (121) and being disposed forward of the crankcase (34) and downward of the cylinder assembly (35), and being disposed adjacent to an exhaust port (30c) of the unitary swing engine (13) as viewed in bottom view;
**characterized in that**
an exhaust device joint (135) joining the crankcase (34) and the exhaust device (120) to each other is provided;
the exhaust device joint (135) includes a crankcase stay (136) mounted on the crankcase (34), an exhaust device stay (137) mounted on the catalyst case (131), and a fastening member (139) by which the crankcase stay (136) and the exhaust device stay (137) are joined to each other.

2. The saddle-type vehicle according to claim 1, wherein:
the crankcase (34) is divided into left and right crankcase members by a crankcase split plane (CS); and
at least part of the first catalyst (142) overlaps a hypothetical line (C) that extends in and along the crankcase split plane CS as viewed in bottom view.

3. The saddle-type vehicle according to any one of claims 1 through 2, wherein:
the first and second catalysts (142, 144) are housed in respective catalyst holders (141, 143);
the catalyst holders (141, 143) are joined to each other by welding; and
the catalyst case (131) has an increased-diameter portion (131c) projecting radially outward out of physical interference with welded portions of the catalyst holders (141, 143).

4. The saddle-type vehicle according to any one of claims 1 through 3, wherein the crankcase stay (136) and the exhaust device stay (137) are transversely offset in a vehicle transverse direction from each other and joined to each other in transversely overlapping relationship to each other.

5. The saddle-type vehicle according to any one of claims 1 through 4, wherein:
the exhaust pipe (121) of the exhaust device (120) includes a vertical portion (122g) extending downward from the exhaust pipe joint (35e) of the cylinder assembly (35), a side extension (122e) extending from a downstream end of the vertical portion (122g) laterally toward one transverse side of the hypothetical line (C) extending in and along the crankcase split plane (CS) of the crankcase (34) as viewed in bottom view, and a U-shaped curved portion (121a) contiguous to the side extension (122e); and
the crankcase stay (136) is disposed on the other transverse side of the hypothetical line (C) extending in and along the crankcase split plane (CS) as viewed in bottom view.

6. The saddle-type vehicle according to any one of claims 1 through 5, wherein:
the catalytic device (140) has a longitudinal axis oriented transversely across the saddle-type vehicle; and
the exhaust device joint (135) and the exhaust pipe joint (35e) interconnecting the exhaust pipe (121) and the cylinder assembly (35) are disposed one on each side of a central transverse axis (140b) of the catalytic device (140), as viewed in bottom view.

## Patentansprüche

1. Fahrzeug des Sattelsitztyps, das aufweist:
einen Fahrzeugkarosserierahmen (12);
einen einteiligen schwingbar gelagerten Motor (13), der eine Zylinderbaugruppe (35) und ein Kurbelwellengehäuse (34), die im Wesentlichen horizontal angeordnet sind, aufweist, wobei der einteilige schwingbar gelagerte Motor (13) schwingbar am Fahrzeugkarosserierahmen (12) durch ein Verbindungselement (38) gehalten wird; und
eine Abgasvorrichtung (120), die mit dem einteiligen schwingbar gelagerten Motor (13) verbunden ist und ein Abgasrohr (121) und eine Katalysatorvorrichtung (140) aufweist, die im Abgasrohr (121) angeordnet ist; wobei:
das Verbindungselement (38) oberhalb des Kurbelwellengehäuses (34) angeordnet ist;
wenigstens ein Teil der Katalysatorvorrichtung (140) unterhalb der Zylinderbaugruppe (35) in einem Seitenaufriss betrachtet angeordnet ist;
die Katalysatorvorrichtung (140) positioniert ist in einem Gebiet zwischen einer hypothetischen Linie (L1), die ein Verbindungsgelenk (39), durch das das Verbindungselement (38) mit dem Fahrzeugkarosserierahmen (12) verbunden ist, und ein vorderes Ende des Kurbelwellengehäuses (34) verbindet, und einer hypothetische Linie (L2), die das Verbindungsgelenk (39) und ein Abgasrohr-Verbindungselement (35e) des einteiligen schwingbar gelagerten Motors (13), an dem ein Ende der Abgasvorrichtung (20) verbunden ist, verbindet;
die Abgasvorrichtung (120) ein Katalysatorgehäuse (131) aufweist, das die Katalysatorvorrichtung (140) darin aufnimmt;
die Katalysatorvorrichtung (140) eine Vielzahl von Katalysatoren aufweist,
die erste und zweite Katalysatoren (142, 144) aufweisen;
der erste Katalysator (142) vorgelagert im Abgasrohr (121) angeordnet ist und vorderhalb des Kurbelwellengehäuses (34) und unterhalb der Zylinderbaugruppe (35) angeordnet ist und benachbart zueinander an einer Abgasöffnung (30c) des einteiligen schwingbar gelagerten Motors (13) in einer Ansicht von unten angeordnet ist;
**dadurch gekennzeichnet, dass**
ein Abgasvorrichtungs-Verbindungselement (135), das das Kurbelwellengehäuse (34) und das Abgasrohr (120) miteinander verbindet,
vorgesehen ist;
das Abgasvorrichtungs-Verbindungselement (135) einen Kurbelwellengehäusesteg (136) aufweist, der am Kurbelwellengehäuse (34) montiert ist, einen Abgasvorrichtungssteg (137), der am Katalysatorgehäuse (131) befestigt ist, und ein Befestigungselement (139), durch das der Kurbelwellengehäusesteg (136) und der Abgasvorrichtungssteg (137) miteinander verbunden sind.

2. Fahrzeug des Sattelsitztyps nach Anspruch 1,
wobei das Kurbelwellengehäuse (34) in linke und rechte Kurbelwellengehäuseelemente durch eine Kurbelwellengehäuse-Trennebene (CS) unterteilt ist; und
wenigstens ein Teil des ersten Katalysators (142) eine hypothetische Linie (C) überlappt, die in und entlang der Kurbelwellengehäuse-Trennebene (CS) in einer Ansicht von unten verläuft.

3. Fahrzeug des Sattelsitztyps nach einem der Ansprüche 1 bis 2, wobei:
der erste und zweite Katalysator (142, 144) in jeweiligen Katalysatorhalterungen (141, 143) aufgenommen sind;
wobei die Katalysatorhalterungen (141, 143) miteinander durch Schweißen verbunden sind; und
das Katalysatorgehäuse (131) einen Bereich (131c) mit vergrößertem Durchmesser hat, der radial nach außen von der physikalischen Überschneidung mit geschweißten Bereichen der Katalysatorhalterungen (141, 143) hervorsteht.

4. Fahrzeug des Sattelsitztyps nach einem der Ansprüche 1 bis 3,
wobei der Kurbelwellengehäusesteg (196) und der Abgasvorrichtungssteg (137) quer in einer Fahrzeugquerrichtung voneinander versetzt sind und in einer quer überlappenden Beziehung zueinander miteinander verbunden sind.

5. Fahrzeug des Sattelsitztyps nach einem der Ansprüche 1 bis 4, wobei:
das Abgasrohr (121) der Abgasvorrichtung (120) einen vertikalen Bereich (122b) aufweist, der von dem Abgasrohr-Verbindungselement (35e) der Zylinderbaugruppe (35) nach unten verläuft, einen Seitenfortsatz (122e), der von einem nachgelagerten Ende des vertikalen Bereichs (122 g) seitlich in Richtung einer Querseite der hypothetischen Linie (C) verläuft, die in und
entlang der Kurbelwellengehäuse-Trennebene (CS) des Kurbelwellengehäuses (34) in einer Ansicht von unten betrachtet verläuft,
und einen U-förmigen gebogenen Bereich (121a), der am Seitenfortsatz (122e) angrenzt; und
der Kurbelwellengehäusesteg (136) an der anderen Querseite der hypothetischen Linie (C) angeordnet ist, die in und entlang der Kurbelwellengehäuse-Trennebene (CS) in einer Ansicht von unten betrachtet verläuft.

6. Fahrzeug des Sattelsitztyps nach einem der Ansprüche 1 bis 5, wobei:
die Katalysatorvorrichtung (140) eine Längsachse hat, die quer zum Fahrzeug des Sattelsitztyps ausgerichtet ist; und
das Abgasvorrichtungs-Verbindungselement (135) und das Abgasrohr-Verbindungselement (35e), die das Abgasrohr (121) und die Zylinderbaugruppe (35) verbinden, eines an jeder Seite einer zentralen Querachse (140b) der Katalysatoreinrichtung (140) in einer Ansicht von unten angeordnet sind.

## Revendications

1. Véhicule de type à selle comprenant :
un cadre de carrosserie de véhicule (12) ;
un moteur à balancier unitaire (13) comportant un ensemble cylindre (35) et un carter (34) qui sont disposés sensiblement horizontalement, le moteur à balancier unitaire (13) étant supporté de manière oscillante sur le cadre de carrosserie de véhicule (12) par une liaison (38) ; et
un dispositif d'échappement (120) connecté au moteur à balancier unitaire (13) et ayant un tuyau d'échappement (121) et un dispositif catalytique (140) disposé dans le tuyau d'échappement (121) ; dans lequel :
la liaison (38) est disposée vers le haut du carter (34) ;
au moins une partie du dispositif catalytique (140) est disposée vers le bas de l'ensemble cylindre (35) tel que vu en élévation latérale ;
le dispositif catalytique (140) est positionné dans une zone entre une ligne hypothétique (L1) interconnectant un joint de liaison (39) par lequel la liaison (38) est couplée au cadre de carrosserie de véhicule (12) et une extrémité avant du carter (34), et une ligne hypothétique (L2) interconnectant le joint de liaison (39) et un joint de tuyau d'échappement (35e) du moteur à balancier unitaire (13) auquel une extrémité du dispositif d'échappement (120) est connectée ;
le dispositif d'échappement (120) comporte un boîtier de catalyseur (131) logeant le dispositif catalytique (140) à l'intérieur de celui-ci ;
le dispositif catalytique (140) comporte une pluralité de catalyseurs comportant des premier et deuxième catalyseurs (142, 144) ;
le premier catalyseur (142) étant disposé en amont dans le tuyau d'échappement (121) et étant disposé en avant du carter (34) et vers le bas de l'ensemble cylindre (35), et étant disposé adjacent à un orifice d'échappement (30c) du moteur à balancier unitaire (13) tel que vu dans une vue de dessous ;
**caractérisé en ce que**
un joint de dispositif d'échappement (135) reliant le carter (34) et le dispositif d'échappement (120) l'un à l'autre est fourni ;
le joint de dispositif d'échappement (135) comporte un support de carter (136) monté sur le carter (34), un support de dispositif d'échappement (137) monté sur le boîtier de catalyseur (131), et un élément de fixation (139) par lequel le support de carter (136) et le support de dispositif d'échappement (137) sont reliés l'un à l'autre.

2. Véhicule de type à selle selon la revendication 1 dans lequel :
le carter (34) est divisé en éléments de carter gauche et droit par un plan de séparation de carter (CS) ; et
au moins une partie du premier catalyseur (142) chevauche une ligne hypothétique (C) qui s'étend dans et le long du plan de séparation de carter (CS) tel que vu dans une vue de dessous.

3. Véhicule de type à selle selon l'une quelconque des revendications 1 et 2 dans lequel :
les premier et deuxième catalyseurs (142, 144) sont logés dans des porte-catalyseurs (141, 143) respectifs ;
les porte-catalyseurs (141, 143) sont reliés l'un à l'autre par soudage ; et
le boîtier de catalyseur (131) a une partie de diamètre accru (131c) qui fait saillie radialement vers l'extérieur hors de toute interférence physique avec des parties soudées des porte-catalyseurs (141, 143).

4. Véhicule de type à selle selon l'une quelconque des revendications 1 à 3, dans lequel le support de carter (136) et le support de dispositif d'échappement (137) sont décalés transversalement dans une direction transversale de véhicule l'un par rapport à l'autre et reliés l'un à l'autre en se chevauchant transversalement.

5. Véhicule de type à selle selon l'une quelconque des revendications 1 à 4, dans lequel :
le tuyau d'échappement (121) du dispositif d'échappement (120) comporte une partie verticale(122g) s'étendant vers le bas à partir du joint de tuyau d'échappement (35e) de l'ensemble cylindre (35), une extension latérale (122e) s'étendant à partir d'une extrémité aval de la partie verticale (122g) latéralement vers un côté transversal de la ligne hypothétique (C) s'étendant dans et le long du plan de séparation de carter (CS) du carter (34) tel que vu dans une vue de dessous, et une partie incurvée en forme de U (121a) contiguë à l'extension extension latérale (122e) ; et
le support de carter (136) est disposé sur l'autre côté transversal de la ligne hypothétique (C) s'étendant dans et le long du plan de séparation de carter (CS) tel que vu dans une vue de dessous.

6. Véhicule de type à selle selon l'une quelconque des revendications 1 à 5, dans lequel :
le dispositif catalytique (140) a un axe longitudinal orienté transversalement à travers le véhicule de type à selle ; et
le joint de dispositif d'échappement (135) et le joint de tuyau d'échappement (35e) interconnectant le tuyau d'échappement (121) et l'ensemble cylindre (35) sont disposés sur chaque côté d'un axe transversal central (140b) du dispositif catalytique (140), tel que vu dans une vue de dessous.
